# EUROPEAN PATENT SPECIFICATION

(11) **EP 1 544 233 B1**
(45) Date of publication and mention of the grant of the patent: **02.08.2006**
(21) Application number: 04257838.5
(22) Date of filing: 16.12.2004
(51) Int. Cl.: C08J 5/18, B32B 27/18, B32B 27/32, C08K 5/42, C08K 5/103, C08K 5/00, C08K 3/00

(54) **Packaging film**
Verpackungsfolie
Film d'emballage

(30) Priority: 19.12.2003 JP 2003421793; 26.07.2004 JP 2004217519
(43) Date of publication of application: 22.06.2005
(73) Proprietor: Takemoto Yushi Kabushiki Kaisha, Gamagouri-shi Aichi-ken (JP)
(72) Inventor: Kamei, Toshiya c/o Takemoto Yushi K.K., Gamagouri-shi Aichi-ken (JP); Itaya, Yukiyasu c/o Takemoto Yushi K.K., Gamagouri-shi Aichi-ken (JP)
(74) Representative: Smyth, Gyles Darren

(56) References cited:
- EP-A- 1 477 305
- DE-A1- 3 310 417
- US-A- 3 541 040
- US-A- 5 346 944

## Description

### Background of the Invention

This invention relates to a packaging film.

In recent years, single-layered and multi-layered packaging films comprising a layer of a synthetic resin material or a synthetic resin composition have been widely used for packaging products such as food items and medicaments. Packaging films using a polyolefin resin composition for forming the layer that comes into contact with the objects to be packaged are used particularly frequently. Such a packaging film is required to have at least the layer that comes into contact with the objects to be packaged having antifog properties in addition to its property of natural transparency, such that the packaged objects can be visible from the outside. Additionally, as the packaging operation comes to be automated, smoothness and antiblocking properties are also coming to be required in order to improve the adaptability to the packaging machine. The present invention relates to an improved packaging film that can satisfy all such requirements.

As disclosed in Japanese Patent Publications Tokkai 4-323228 and 2000-343655 and U.S. Patent 5,346,944, it is known to form the layer of a packaging film that comes into contact with the objects to be packaged by using a polyolefin resin composition comprising a polyolefin resin containing inorganic particles and compounds such as polyoxyethylene, alkylamine, polyoxyethylene alkylamide and an aliphatic acid partial ester of an aliphatic polyhydric alcohol in order to provide it with antifog properties and antiblocking properties. It is also known to form such a layer by using a polyolefin resin composition containing organic particles and compounds such as polyoxyethylene alkylamine, polyoxyethylene alkylamide and an aliphatic acid partial ester of an aliphatic polyhydric alcohol, as disclosed in Japanese Patent Publications Tokkai 4-220436 and 8-59852.

These prior art packaging films, however, have the problem that the layer that comes into contact with the objects to be packaged cannot sufficiently satisfy the requirements of antifog and antiblocking properties without their property of natural transparency being adversely affected.

EP 1477305 is prior art which falls under Article 54(3) EPC. This document discloses a co-extruded, laminated polyolefin film with two or more layers, said film comprising at least one outer layer and at least one other layer, wherein:
at least one of said at least one outer layers comprises olefin resin containing a non-ionic surfactant and a salt of an organic sulfonic acid in a total amount of 0.05-3 weight % and at a weight ratio of 20/80-99/1; and said at least one other layer comprises olefin resin;
wherein said non-ionic surfactant comprises one or more selected from the group consisting of partial esters of a polyol with valence 3-6 and an aliphatic monocarboxylic acid with 6-22 atoms; alkyl diethanol amines with alkyl group with 6-22 atoms; and alkyl diethanol amides with acyl group with 6-22 carbon atoms; and
wherein said salt of organic sulfonic acid comprises one or more selected from the group consisting of alkali salts of alkyl sulfonic acids with alkyl group with 6.22 carbon atoms; alkali salts of alkyl aryl sulfonic acids with alkyl group with 2-22 carbon atoms; and alkali salts of sulfo fatty acid esters with alkyl group with 2-22 carbon atoms.

Any of the layers of the laminated polyolefin film may contain agents including thermal stabilisers, antioxidants, neutralisers, lubricants, weatherproof agents, ultraviolet radiation absorbers and anti blocking agents.

DE 3310417 discloses anti static agents, consisting of a mixture of
a) alkali salts of C₈ to C₁₈ alkylsulphonic acids and
b) fatty acid glycerides with at least 50 weight % saturated unbranched C₆ to C₁₀ fatty acid monoglycerides and/or
c) fatty acid diethanol amides with from 8 to 18 carbon atoms in the saturated aliphatic portion,
wherein the weight proportion of a to (b + c) is in the range of from 4:1 to 1:4.

### Summary of the Invention

It is, therefore, an object of this invention to provide a packaging film which may be single-layered or multi-layered, but which has a layer that comes into contact with the objects to be packaged and is formed so as to simultaneously possess superior antifog and antiblocking properties without its natural transparency property being adversely affected.

The present invention is based on the discovery made by the present inventors, as a result of their diligent studies in view of the aforementioned problems of the prior art, that a material obtained by using a polyolefin resin containing three specified components at a specified ratio as the layer that comes into contact with the objects to be packaged.

### Detailed Description of the Invention

The invention relates to a single-layered or multi-layered packaging film having a layer that comes into contact with the objects to be packaged and is made of a polyolefin resin composition containing Component A, Component B and Component C, to be described below, such that their total amount is from 0.15 to 12 weight % of the polyolefin resin composition, wherein the polyolefin resin of said inner layer contains said Component A in an amount of from 0.3 to 4 weight %, said Component B in an amount of from 0.2 to 2.6 weight % and said Component C in an amount of from 0.1 to 1 weight %, and wherein said Component A and said Component B are contained in a weight ratio of from 60/40 to 80/20, and said Component C is contained in a weight ratio of from 10/100 to 100/100 with respect to the sum of said Component A and said Component B.

In the above, Component A is one or more selected from the group consisting of a partial ester of an aliphatic trihydric-hexahydric alcohol and an aliphatic monocarboxylic acid having from 8 to 22 carbon atoms, an alkylene oxide adduct of an aliphatic monohydric alcohol having from 8 to 22 carbon atoms, an alkylene oxide adduct of an aliphatic monocarboxylic acid having from 8 to 22 carbon atoms and an alkylene oxide adduct of a partial ester of an aliphatic trihydric-hexahydric alcohol and an aliphatic monocarboxylic acid having from 8 to 22 carbon atoms; Component B is one or more selected from the group consisting of an alkali salt of an alkyl sulfonic acid having an alkyl group having from 12 to 18 carbon atoms; and Component C is one or more selected from the group consisting of oxidic it inorganic particles, silicate inorganic particles and organic cross-linked particles.

A packaging film embodying this invention is a single-layered or multi.layered film comprising a layer that comes into contact with the objects to be packaged and is made of a polyolefin resin composition characterized in that it is formed from a polyolefin resin containing the aforementioned Components A, B and C in the above-defined amounts.

Examples of the polyolefin resin to be used in polyolefin resin composition for forming the layer that comes into contact with the objects to be packaged include (1) α-olefin homopolymers, such as polyethylene and polypropylene, which can be obtained from one selected from the group consisting of α-olefin having from 2 to 8 carbon atoms, such as ethylene, propylene, 1-butene, 1-hexene, 4-methylpentene-1 and 1-octene; (2) α-olefin copolymers such as ethylene-propylene copolymers, ethylene-(1-butene) copolymers and ethylene-(1-hexene) copolymers, which can be obtained from two or more selected from the aforementioned α-olefins having from 2 to 8 carbon atoms; and (3) copolymers obtained from ethylene and vinyl acetate. Among the above, α-olefin homopolymers of the aforementioned group (1) and α-olefin copolymers of the aforementioned group (2) are preferred. Furthermore, among the α-olefin copolymers of the aforementioned group (2), copolymers of ethylene and an α-olefin, containing units consisting of an α-olefin having from 4 to 8 carbon atoms at from 3.5 to 50 weight %, are preferred. Of such α-olefin copolymers, those obtained by using any of the homogeneous catalysts such as a high-activated ziegler catalyst and a metallocene catalyst, that are all well known, and by a gas phase method or a solution polymerization method are preferable, and those having a density of from 0.86 to 0.94g/cm³ and MFR of from 0.01 to 20g/10 minutes are particularly preferable. Two or more kinds of such polyolefin resins may be used by mixing them together.

Examples of Component A to be used in the polyolefin resin composition for forming the layer that comes into contact with the objects to be packaged, include (1) a partial ester of an aliphatic trihydric-hexahydric alcohol and aliphatic monocarboxylic acid having from 8 to 22 carbon atoms; (2) an alkylene oxide adduct of an aliphatic monohydric alcohol having from 8 to 22 carbon atoms; (3) an alkylene oxide adduct of an aliphatic monocarboxylic acid having from 8 to 22 carbon atoms; (4) an alkylene oxide adduct of a partial ester of an aliphatic trihydric-hexahydric alcohol and an aliphatic monocarboxylic acid having from 8 to 22 carbon atoms; and (5) mixtures of two or more selected from the aforementioned groups (1)-(4).

Examples of an aliphatic trihydric-hexahydric alcohol used for forming the partial esters of Component A include (1) aliphatic trihydric alcohols, such as glycerol and trimethyrol propane; (2) aliphatic tetrahydric alcohols, such as pentaerythritol, glucose, sorbitan, diglycerol and ethyleneglycol diglycerylether; (3) aliphatic pentahydric alcohols such as triglycerol and trimethyrol propane diglyceryiether; and (4) aliphatic hexahydric alcohols such as sorbitol, tetraglycerol and dipentaerythritol. Of these, aliphatic trihyhdric or tetrahydric alcohols are preferred.

Examples of aliphatic monocarboxylic acids having from 8 to 22 carbon atoms and being used for forming the partial esters of Component A include octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, docosanoic acid, 2-ethylhexanoic acid and 3,5,5-trimethyl hexanoic acid. Among these, aliphatic monocarboxylic acids having from 12 to 18 carbon atoms are preferred, and dodecanoic acid, tetradecanoic acid and octadecenoic acid are particularly preferred.

The partial esters used in Component A are obtained by appropriately combining the aforementioned aliphatic trihydric-hexahydric alcohol and the aliphatic monocarboxylic acid having from 8 to 22 carbon atoms, and having at least one free hydroxyl group in the molecule, but partial esters obtained from an aliphatic trihydric or tetrahydric alcohol and an aliphatic monocarbooxylic acid having from 12 to 18 carbon atoms are preferable. Examples of such partial esters include glycerol monolaurate, sorbitan monolaurate and diglycerol monooleate.

Examples of alkylene oxide adducts of aliphatic monohydric alcohols having from 8 to 22 carbon atoms include (1) an aliphatic monohydric alcohol having from 8 to 22 carbon atoms and having one kind of alkylene oxide added and (2) an aliphatic monohydric alcohol having from 8 to 22 carbon atoms and having two or more kinds of alkylene oxide added. Examples of an aliphatic monohydric alcohol having from 8 to 22 carbon atoms used for producing such alkylene oxide adducts include octyl alcohol, nonyl alcohol, decyl alcohol, undecyl alcohol, dodecyl alcohol, tridecyl alcohol, tetradecyl alcohol, tentadecyl alcohol, hexadecyl alcohol, hexadecenyl alcohol, heptadecyl alcohol, octadecyl alcohol, octadecyl alcohol, nonadecyl alcohol, eicosyl alcohol, eicosenyl alcohol, docosyl alcohol, 2-ethylhexyl alcohol and 3,5,5-trimethylhexyl alcohol. Among these, aliphatic monohydric alcohols having from 12 to 18 carbon atoms are preferable and dodecyl alcohol, tetradecyl alcohol and octadecyl alcohol are particularly preferable. Examples of alkylene oxides also used for the production include alkylene oxides having from 2 to 4 carbon atoms, such as ethylene oxide, propylene oxide, 1,2-butylene oxide and 1,4-butylene oxide. When two or more kinds of such alkylene oxides are used, the type of addition of the alkylene oxide to the aliphatic monohydric alcohol having from 8 to 22 carbon atoms may be random addition, block addition or random-block addition. Of the aforementioned alkylene oxide adducts of aliphatic monohydric alcohols having from 8 to 22 carbons atoms, those having an average molecular weight of from 200 to 1500 are preferable, and those having an average molecular weight of from 300 to 1000 are particularly preferable.

Examples of alkylene oxide adducts of an aliphatic monocarboxylic acid having from 8 to 22 carbon atoms include (1) an aliphatic monocarboxylic acid having from 8 to 22 carbon atoms and having one kind of alkylene oxide added and (2) an aliphatic monocarboxylic acid having from 8 to 22 carbon atoms and having two or more kinds of alkylene oxide added. Examples of aliphatic monocarboxylic acids and alkylene oxides used for producing such alkylene oxide adducts are the same as described above. Of such alkylene oxide adducts of an aliphatic monocarboxylic acid having from 8 to 22 carbons atoms, those having an average molecular weight of from 200 to 1500 are preferable, and those having an average molecular weight of from 300 to 1000 are particularly preferable.

Examples of alkylene oxide adducts of a partial ester of an aliphatic trihydric-hexahydric alcohol and an aliphatic monocarboxylic acid having from 8 to 22 carbon atoms include (1) a partial ester of an aliphatic trihydric-hexahydric alcohol and an aliphatic monocarboxylic acid having from 8 to 22 carbon atoms and having one kind of alkylene oxide added, and (2) a partial ester of an aliphatic trihydric-hexahydric alcohol and an aliphatic monocarboxylic acid having from 8 to 22 carbon atoms and having two or more kinds of alkylene oxide added. Examples of aliphatic trihydric-hexahydric alcohols, aliphatic monocarboxylic acids having from 8 to 22 carbon atoms, alkylene oxides and partial esters of an aliphatic trihydric-hexahydric alcohol and aliphatic monocarboxylic acids having from 8 to 22 carbon atoms for producing such alkylene oxide adducts are as described above. Of such alkylene oxide adducts of a partial ester of an aliphatic trihydric-hexahydric alcohol and an aliphatic monocarboxylic acid having from 8 to 22 carbon atoms used as Component A, those having an average molecular weight of from 200 to 1700 are preferable and those having an average molecular weight of from 300 to 1200 are particularly preferable.

Partial esters of an aliphatic trihydric or tetrahydric alcohol and an aliphatic monocarboxylic acid having from 12 to 18 carbon atoms are particularly preferable as Component A, but also preferable are partial esters of an aliphatic trihydric-hexahydric alcohol and an aliphatic monocarboxylic acid having from 8 to 22 carbon atoms and having a melting point equal to or below 40°C as a whole. In the latter case, it may be a single partial ester having a melting point equal to or below 40°C or a mixture of two or more partial esters such that the total melting point as a result of the mixing is 40°C or below. In the latter case, mixtures containing a partial ester having a melting point of 40°C or below at 30 weight % or more are particularly preferable. Examples of partial esters having a me lting point of 40°C or below include diglycerol monooleate, diglycerol monolaurate, sorbitan monooleate and glycerol monooleate. Example mixtures include mixtures of diglycerol monostearate and diglycerol monooleate, those of diglycerol monostearate and glycerol monooleate, those of diglycerol monolaurate and glycerol monooleate and those of sorbitan monooleate and glycerol monooleate.

Examples of Component B to be used in the polyolefin resin composition for forming the layer that comes into contact with the objects to be packaged include (1) an alkali salt of an alkyl sulfonic acid having an alkyl group having from 12 to 18 carbon atoms; and (2) mixtures of two or more selected from the aforementioned group (1).

Examples of an alkali salt of an alkyl sulfonic acid having an alkyl group having from 12 to 18 car on atoms and serving as Component B include sodium dodecylsulfonate, lithium tetradecylsulfonate, lithium hexadecylsulfonate and lithium octadecylsulfonate.

Examples of Component C to be used in the polyolefin resin composition for forming the layer that comes into contact with the objects to be packaged include (1) oxidic inorganic particles, (2) silicate inorganic particles, (3) organic cross-link particles and (4) any mixtures of two or more selected from the groups (1)-(3).

Examples of oxidic inorganic particles serving as Component C include silica, diatomaceous earth, alumina, iron oxide and ferrite. Among these, silica and diatomaceous earth are preferred, and silica is particularly preferred.

Examples of silicate inorganic particles serving as Component C include zeolite, talc, wollastonite, mica and clay. Among these, zeolite, talc and wollastonite are preferred, and zeolite and talc are particularly preferred.

Examples of organic cross-linked particles serving as Component C include crosslinked silicone particles, cross-linked polyamide particles, cross-linked polytraizine particles, cross-linked polyacryl particles and cross-linked polystyrene particles. Among the above, cross-linked silicone particles, cross-linked polyacryl particles and doss-linked styrene particles are preferred, and cross-linked polyacryl particles are particularly preferred.

Among the examples of Component C explained above, oxidic inorganic particles and silicate inorganic particles are preferred and silica, zeolite and talc are particularly preferred. Although the invention does not impose any particular limitations on the oxidic inorganic particles, silicate inorganic particles and organic cross-linked particles serving as Component C, those having an average particle diameter of from 0.5 to 10µm are preferred and those having an average particle diameter of from 1 to 5µm are more preferred. Naturally produced minerals may be used as oxidic inorganic particles, silicate inorganic particles and organic cross-linked particles serving as Component C. Artificially synthesized products may also be used. They may be used either directly without initially subjecting them to any particular processing, or after carrying out a processing by means of a ball mill, an acid or a silane coupling agent.

The packaging film of this invention has a layer that comes into contact with the objects to be packaged formed from a polyolefin resin composition comprising a polyolefin resin containing the aforementioned Components A, B and C as necessary components such that they are contained in a total amount of from 0.15 to 12 weight %, and containing Component A in an amount of from 0.3 to 4 weight %, Component B in an amount of from 0.2 to 2.6 weight % and Component C in an amount of from 0.1 to 1 weight % and containing Components A and B at a weight ratio of from 60/40 to 80/20 and Component C at a weight ratio of from 10/100 to 100/100 with respect to the sum of component A, and Component B.

The polyolefin resin compositions explained above for forming the layer that comes into contact with the objects to be packaged may additionally contain agents of other kinds, depending on their purposes. Examples of such other agents include thermal stabilizers, anti-oxidants, neutralizing agents, lubricants, weatherproof agents, ultraviolet absorbing agents and antiblocking agents. The contents of such other agents should preferably be made as small as possible.

Such polyolefin resin compositions for forming the layer that comes into contact with the objects to be packaged may themselves be prepared by any of the known methods. Such well known methods include (1) the method of first preparing master pellets containing, Components A, B and C at high concentrations by mixing Components A, B and C inside a mixer, such as a tumbler blender or a henschel mixer, and producing particles by melting and kneading together this mixture by means of an extruder, such as a single-spindle extruder or a multiple-spindle extruder, and then obtaining a specified polyolefin resin composition by mixing these master pellets further with polyolefin resin; and (2) the method of mixing polyolefin resin with Components A, B and C in a mixer, such as a tumbler blender or a henschel mixer, and obtaining a specified polyolefin resin composition by producing particles while mixing the components together and melting them by means of a kneader, a single-spindle extruder or a multiple-spindle extruder.

Packaging films of this invention may be molded by any of the known methods, including inflation molding methods, such as air-cooling single step inflation molding, air-cooling two-step inflation molding and water-cooling inflation molding, and T-die molding methods using straight-through manifold dies, coat hanger dies and their combinations. Methods of layering up molded films in layers include dry laminate processes, sandwich laminate processes, extrusion laminate processes and coextrusion processes. For the packaging films according to this invention, however, multi-layered films layered up by a coextrusion process are preferred. For producing a layered packaging film, a polyurethane adhesive, an organotitanium anchor coating agent, an isocyanate anchor coating agent or an adhesive resin may be used. A molded film, as explained above, may be further drawn whether a single-layered or multi-layered packaging film is being produced. Examples of drawing methods include sequential biaxial orientation, simultaneous biaxial orientation and tubular biaxial orientation.

As explained above, packaging films of this invention have a layer that comes into contact with the objects to be packaged and that has superior antifog and antiblocking properties without adversely affecting its natural transparency characteristics.

The invention is described next by way of the following five embodiments.

### Embodiment (1)

A single-layered or multi-layered packaging film including a layer formed from a polyolefin resin composition that comes into contact with the objects to be packaged, the polyolefin resin composition comprising ethylene-(1-butene) copolymer (ethylene copolymerization ratio = 95%, density = 0.920g/cm³, MFR = 2.1g/10 minutes) containing diglycerol monolaurate at 0.39 weight %, sodium dodecylsulfonate at 0.24 weight % and silica (having an average particle diameter of 4.0µm) at 0.57 weight %.

### Embodiment 2

A single-layered or multi-layered packaging film including a layer formed from a polyolefin resin composition that comes into contact with the objects to be packaged, the polyolefin resin composition comprising ethylene-(1-hexene) copolymer (ethylene copolymerization ratio = 96%, density = 0.930g/cm³, MFR = 1.0g/10 minutes) containing a mixture of diglycerol monostearate and diglycerol monooleate at a weight ratio of 65/35 at 3.50 weight %, sodium tetradecylsulfonate at 1.20 weight % and silica (having an average particle diameter of 3.0µm) at 0.70 weight %.

### Embodiment 3

A single-layered or multi-layered packaging film including a layer formed from a polyolefin resin composition that comes into contact with the objects to be packaged, the polyolefin resin composition comprising ethylene-acetic acid copolymer (ethylene copolymerization ratio = 98%, MFR = 1.5g/10 minutes) containing a mixture of diglycerol monostearate and glycerol monooleate at a weight ratio of 50/50 at 1.40 weight %, sodium pentadecylsulfonate at 0.60 weight % and zeolite (having an average particle diameter of 4.0µm) at 0.80 weight %.

### Embodiment (4)

A single-layered or multi-layered packaging film including a layer formed from a polyolefin resin composition that comes into contact with the objects to be packaged, the polyolefin resin composition comprising ethylene-propylene copolymer (ethylene copolymerization ratio = 96%, density = 0.90g/cm³, MFR = 8.0g/10 minutes) containing a mixture of diglycerol monolaurate and glycerol monooleate at a weight ratio of 70/30 at 3.80 weight %, sodium hexadecylsulfonate at 2.10 weight % and talc (having an average particle diameter of 2.0µm) at 0.90 weight %.

### Embodiment 5

A single-layered or multi-layered packaging film including a layer formed from a polyolefin resin composition that comes into contact with the objects to be packaged, the polyolefin resin composition comprising propylene (density = 0.90g/cm³, MFR = 2.4g/10 minutes) containing a mixture of sorbitan monolaurate and glycerol monooleate at a weight ratio of 70/30 at 0.78 weight %, a mixture of sodium tetradecylsulfonate and sodium pentadecylsulfonate at a weight ratio of 50/50 at 0.32 weight % and talc (having an average particle diameter of 4.5µm) at 0.20 weight %.

The invention is described next by way of test examples in order to more clearly explain its structure and effects, but it goes without saying that these examples are not intended to limit the scope of the invention. In what follows, "parts" will indicate "weight parts" and "%" will indicate "weight %".

### Part 1 (Production of packaging films)

### Test Example 1 (Invention)

After ethylene-(1-butene) copolymer (ethylene copolymerization ratio = 95%, density = 0.920g/cm³, MFR = 2.1g/10 minutes) (88 parts), diglycerol monolaurate (3.9 parts), sodium dodecylsulfonate (2.4 parts) and silica (having an average particle diameter of 4.0gm) (5.7 parts) were placed inside a tumbler blender and mixed, they were further melted and kneaded by means of a two-spindle extruder to obtain master pellets of polyolefin resin composition. These master pellets (10 parts) and aforementioned ethylene-(1-butene) copolymer (ethylene copolymerization ratio = 95%, density = 0.920g/cm³, MFR = 2.1g/10 minutes) (90 parts) were mixed inside the tumbler blender and supplied to an inflation molder (TKN-40 produced by Chubu Kagaku Kikai Seisakusho) with dies of 75mmφ and a lip gap of 0.5mm for inflation molding under the conditions of extrusion temperature of polyolefin resin composition = 200°C and BUR=1.8 to obtain a single-layered packaging film with a thickness of 40µm.

### Test Examples and 7-9 (Invention), est Examples 10-27 (Comparative), and Comparison Examples 1-6

The packaging films of Test Examples 2-5 and 7-9 (Invention), Test Examples 10-27 (Comparative), and of Comparison Examples 1-6 were similarly prepared as shown in Table 1.

**Table 1**

| | Components contained by polyolefin resin | | | | | | Kind of polyolefin resin |
|---|---|---|---|---|---|---|---|
| | Comp A | Comp B | Comp C | *4 | *5 | *6 | |
| | *1 | *2 | *3 | | | | |
| Test Examples (Invention) | | | | | | | |
| 1 | A-1/0.39 | B-1/0.24 | C-1/0.57 | 1.20 | 62/38 | 90 | E-1 |
| 2 | A-2/3.50 | B-2/1.20 | C-2/0.70 | 5.40 | 74/26 | 15 | E-2 |
| 3 | A-3/1.40 | B-3/0.60 | C-3/0.80 | 2.80 | 70/30 | 40 | B-3 |
| 4 | A-4/3.80 | B-4/2.10 | C-4/0.90 | 6.80 | 64/36 | 15 | E-4 |
| 5 | A-5/0.78 | B-5/0.32 | C-5/0.20 | 1.30 | 71/29 | 18 | E-5 |
| 7 | A-7/0.78 | B-7/0.22 | C-7/0.95 | 1.95 | 78/22 | 95 | E-1 |
| 8 | A-8/0.30 | B-8/0.20 | C-8/0.30 | 0.80 | 60/40 | 60 | E-2 |
| 9 | A-9/2.80 | B-9/1.20 | C-9/0.60 | 4.60 | 70/30 | 15 | E-3 |

| Test Examples (Comparative) | | | | | | | |
|---|---|---|---|---|---|---|---|
| 10 | A-10/1.02 | B-10/0.48 | C-6/0.45 | 1.95 | 68/32 | 30 | E-4 |
| 11 | A-11/1.48 | B-11/0.52 | C-7/0.98 | 2.98 | 74/26 | 49 | E-5 |
| 12 | A-12/0.96. | B-12/0.24 | C-8/0.84 | 2-04 | 80/20 | 70 | E-1 |
| 13 | A-13/0.63 | B-13/0.32 | C-9/0.76. | 1.71 | 66/34 | 80 | E-2 |
| 14 | A-14/0.10 | B-14/0.12 | C-10/0.3 | 0.53 | 45/55 | 141 | E-6 |
| 15 | A-15/45 | B-15/0.50 | C-10/0.3 | 5.30 | 90/10 | 6 | E-1 |
| 16 | A-16/0.06 | B-16/0.06 | C-11/0.06 | 0.18 | 50/50 | 50 | E-2 |
| 17 | A-17/4.8 | B-17/3.5 | C-11/1.5 | 9.80 | 58/42 | 18 | E-4 |
| 18 | A-18/3.3 | B-18/5.0 | C-12/1.9 | 10.2 | 40/60 | 23 | E-3 |
| 19 | A-19/1-7 | B-19/0.30 | C-13/1.2 | 3.2 | 85/15 | 60 | E-4 |
| 20 | A-20/3.44 | B-20/2.81 | C-14/0.50 | 6.75 | 55/45 | 8 | E-5 |
| 21 | A-21/2.4 | B-21/5-6 | C-15/0.24 | 8.24 | 30/70 | 3 | E-1 |
| 22 | A-22/0.98 | B-22/0.02 | C-16/1.75 | 2.75 | 98/7 | 175 | E-2 |
| 23 | A-23/2.8 | B-23/5.2 | C-17/0.32 | 8.32 | 35/65 | 4 | E-5 |
| 24 | A-24/4.8 | B-24/0.20 | C-18/1.80 | 6.80 | 96/4 | 36 | E-6 |
| 25 | A-25/1.50 | B-25/0.04 | C-19/0.30 | 1.84 | 97/3 | 19 | E-2 |
| 26 | A-26/6.0 | B-26/3.00 | C-20/0.70 | 9.70 | 67/33 | 78 | E-3 |
| 27 | A-27/2.00 | B-27/2.00 | C-21/2.20 | 6.20 | 50/50 | 55 | B-4 |

| Comparison Examples | | | | | | | |
|---|---|---|---|---|---|---|---|
| 1 | --/-- | B-1/0.24 | C-1/0.57 | -- | -- | -- | E-1 |
| 2 | A-1/0.39 | --/-- | C-1/0.57 | -- | -- | -- | E-1 |
| 3 | A-1/0.39 | B-1/0.24 | --/-- | -- | -- | -- | E-1 |
| 4 | A-1/0.04 | B-1/0.02 | C-1/0.06 | 0.12 | 67/33 | 100 | E-1 |
| 5 | A-1/4.29 | B-1/2.64 | C-1/6.27 | 13.2 | 62/38 | 90 | E-1 |
| 6 | a-1/0.39 | B-1/0.24 | C-1/0.57 | 1.20 | 62/38 | 90 | B-1 |

| | | | | | | | |
|---|---|---|---|---|---|---|---|
| In Table 1 | | | | | | | |
| *1: Table Kind/concentration (weight %) of Component A in polyolefin resin composition; | | | | | | | |
| *2: Kind/concentration (weight %) of Component B in polyolefin resin composition; | | | | | | | |
| *3: Kind/concentration (weight %) of Component C in polyolefin resin composition; | | | | | | | |
| *4: Total concentration (weight %) of Components A, B and C; | | | | | | | |
| *5: Weight ratio of Component A to Component B; | | | | | | | |
| *6: Ratio (part) of Component C per 100 parts of Components A and B; | | | | | | | |
| A-1: Diglycerol monolaurate (melting point = 20°C); | | | | | | | |
| A-2: Mixture of diglycerol monostearate (melting point = 55°C) and diglycerol monoolmte (melting-point = 2°C) at weight ratio of 65/35; | | | | | | | |
| A-3: Mixture of diglycerol monostearale (melting point = 55°C) and glycerol monooleate (melting point =12°C) at weight ratio of 50/50; | | | | | | | |
| A-4: Mixture of diglycerol monolaurate (melting point = 20°C) and glycerol monooleate (melting point =12°C) at weight ratio of 70/30; | | | | | | | |
| A-5: Mixture of sorbitan monooleate (melting point = 8°C) and glycerol monooleate (melting point-12°C) at weight ratio of 70/30; | | | | | | | |
| A-7: Mixture of glycerol monoerucate (melting point = 50°C) and diglycerol monolaurate (melting point = 20°C) at weight ratio of 10/90; | | | | | | | |
| A-8: Mixture of tetraglycerol monooctanate (melting point = 25°C) and diglycerol monolaurate (melting point = 20°C) at weight ratio of 15/85; | | | | | | | |
| A-9: Mixture of tetraglycerol monoerucate (melting point = 50°C) and diglycerol monolauraie (melting point = 20°C) at weight ratio of 10/90; | | | | | | | |
| A-10: Mixture of glycerol monolaurate (melting point-= 55°C) and diglycerol monolaurate (melting point = 20°C) at weight ratio of 10/90; | | | | | | | |
| A-11: Mixture of tetraglycerol monooleate (melting point = 25°C) and diglycerol | | | | | | | |
| monolaurate (melting point= 20°C) at weight ratio of 10/90; | | | | | | | |
| A-12: Ethylene oxide adduct of octyl alcohol (average molecular weight = 450, melting point = 5°C); | | | | | | | |
| A-13: Ethylene oxide adduct of docosenyl alcohol (average molecular weight = 1200, melting point = 50°C); | | | | | | | |
| A-14: Diglycerol monostearate (melting point = 55°C); | | | | | | | |
| A-15: Sorbitan monostearate (melting point = 60°C); | | | | | | | |
| A-16: Mixture of diglycerol monostearate (melting point = 55°C) and glycerol monostearate (melting point = 70°C) at weight ratio of 50/50; | | | | | | | |
| A-17: Mixture of sorbitan monostearate (melting point = 60°C) and glycerol monostearate (melting point = 70°C) at weight ratio of 50/50; | | | | | | | |
| A-18: Ethylene oxide adduct of octanic acid (average molecular weight = 450, melting point = 5°C); | | | | | | | |
| A-19: Ethylene oxide adduct of docosenic acid (average molecular weight = 1200, melting point = 50°C); | | | | | | | |
| A-20: Ethylene oxide adduct of glycerol monooctanate (average molecular weight = 900, melting point = 30°C); | | | | | | | |
| A-21: Diglycerol monooctanate (melting point =-8°C); | | | | | | | |
| A-22: Ethylene oxide adduct of octadecenyl alcohol (average molecular weight = 900, melting point =2°C); | | | | | | | |
| A-23: Ethylene oxide adduct of dodecanoic acid (average molecular weight = 350; melting point =7°C); | | | | | | | |
| A-24: Ethylene oxide adduct of sorbitan monooleate (average molecular weight = 950, melting point = -10°C); | | | | | | | |
| A-25: Ethylene oxide adduct of glycerol monoerucate (average molecular weight = 1000, melting point = 30°C); | | | | | | | |
| A-26: Ethylene oxide adduct of tetraglycerol monooctanate (average molecular weight = 1200, melting point= 25°C); | | | | | | | |
| A-27: Ethylene oxide adduct of tetraglycerol monoerucate (average molecular weight = 1400, melting point =- 25°C); | | | | | | | |
| a-1: N ,N-bis(2-hydroxyethyl) dodecylamine; | | | | | | | |
| B-1: Sodium dodecylsulfonate; | | | | | | | |
| B-2: Sodium tetradecylsulfonate; | | | | | | | |
| B-3: Sodium pentadecylsulfonate; | | | | | | | |
| B-4: Sodium Hexadecylsulfonate; | | | | | | | |
| B-3: Mixture of sodium tetradecylsulfonate and sodium pentadecylsulfonate at weight ratio of 50/50; | | | | | | | |
| B-7: Lithium octadecylsulfonate; | | | | | | | |
| B-8: Potassium dodecylsulfonate; | | | | | | | |
| B-9: Potassium octadocylsulfonate; | | | | | | | |
| B-10: Sodium hexylsulfonate; | | | | | | | |
| B.11: Sodium docosylsulfonate; | | | | | | | |
| B-12: Sodium docosylbenzene sulfonate; | | | | | | | |
| B-13: Mixture of potassium diethylnaphthalene sulfonate and potassium docosylbenzene sulfonate at weight ratio of 50/50; | | | | | | | |
| B-14: Potassium tetradecylsulfonate; | | | | | | | |
| B-15: Lithium dodecylbenzene sulfonate; | | | | | | | |
| B-16: Potassium 1,2-bis(octyloxycarbonyl)-1-ethane sulfonate; | | | | | | | |
| B-17: Mixture of sodium dodecylbenzene sulfonate and sodium 1,2-bis(octyloxycarbonyl)-1-ethane sulfonate at weight ratio of 50/50; | | | | | | | |
| B-18: Potassium 1,2-bis(ethyloxycarbonyl)-1-ethane sulfonate; | | | | | | | |
| B-19: Sodium 1,2-bis(dodacyloxycarbonyl)-1-ethane sulfonate; | | | | | | | |
| B-20: Mixture of lithium 1,2-bis(ethyloxycarbonyl)-1-ethane sulfonate and lithium 1,2-bis(dodecyloxycarbonyl)-1-ethane sulfonate at weight ratio of 50/50; | | | | | | | |
| B-21: Lithium octylsulfonate; | | | | | | | |
| B-22: Potassium hexylbenzen sulfonate; | | | | | | | |
| B-23: Lithium dibutylnaphthalene sulfonate; | | | | | | | |
| B-24: Mixture of lithium octylsulfonate and lithium dibutylnaphthalene sulfonate at weight ratio of 50/50; | | | | | | | |
| B-25: Sodium octylsulfonate; | | | | | | | |
| B-26: Potassium 1,2-bis(docosyloxycarbonyl)-1-ethane sulfonate; | | | | | | | |
| B-27: Mixture of lithium octylsulfonate and lithium 1,2-bis(docosyloxycarbonyl)-1-ethane sulfonate; | | | | | | | |
| C-1: Silica (average particle diameter = 4.0µm); | | | | | | | |
| C-2: Silica (average particle diameter = 3.0µm) | | | | | | | |
| C-3: Zeolite (average particle diameter = 4.0µm); | | | | | | | |
| C-4: Tale (average particle diameter = 2.0µm); | | | | | | | |
| C-5: Talc (average particle diameter =4.5µm); | | | | | | | |
| C-7: Mixture of silica (average particle diameter = 3.0µm) and zeolite (average particle diameter = 4.0µm) at weight ratio of 70/30; | | | | | | | |
| C-8: Mixture of silica (average particle diameter = 4.0µm) and talc (average particle diameter = 2.0µm) at weight ratio of 50/50; | | | | | | | |
| C-9: Mixture of talc (average particle diameter = 4.5µm) and zeolite (average particle diameter = 4.0µm) at weight ratio of 50/50; | | | | | | | |
| C-10: Diatomaceous earth (average particle diameter = 6.0µm); | | | | | | | |
| C-11: Wollastonite (average particle diameter = 4.0µm); | | | | | | | |
| C-12: Mixture of silica (average particle diameter = 4.0µm) and diatomaceous earth (average particle diameter = 6.0µm) at weight ratio of 50/50; | | | | | | | |
| C-13: Mixture of zeolite (average particle diameter = 4.0µm) and diatomaceous earth (average particle diameter = 6.0µm) at weight ratio of 50/50; | | | | | | | |
| C-14: Mixture of talc (average particle diameter = 4.5µm) and wollastonte (average particle diameter = 4.0µm) at weight ratio of 50/50; | | | | | | | |
| C-15: Alumina (average particle diameter = 2.0µm); | | | | | | | |
| C-16: Mica (average particle diameter = 7.0µm); | | | | | | | |
| C-17: Cross-link silicone particles (average particle diameter = 2.0µm); | | | | | | | |
| C-18: Cross-link polyacryl particles (average particle diameter = 4.0µm); | | | | | | | |
| C-19: Mixture of silica (average particle diameter = 4.0µm) and mica (average particle diameter = 7.0µm) at weight ratio of 50/50; | | | | | | | |
| C-20: Mixture of zeolite (average particle diameter = 4.0µm) and cross-link silicone particles (average particle diameter = 2.0µm) at weight ratio of 50/50; | | | | | | | |
| C-21: Mixture of talc (average particle diameter = 4.5µm) and cross-link polyacryl particles (average particle diameter = 4.0µm) at weight ratio of 50/50; | | | | | | | |
| E-1: Ethylene-(1-butene) copolymer (ethylene copolymerization ratio = 95%, density = 0.920g/cm³, MFR = 2.1 g/10 minutes); | | | | | | | |
| E-2: Ethylene-(1-hexene) copolymer (ethylene copolymerization ratio = 96%, density = 0.930g/cm³, MFR =1.0g/10 minutes); | | | | | | | |
| E-3: Ethylene-vinyl acetate copolymer (ethylene copolymerization ratio = 98%, MFR = 1.5g/10 minutes); | | | | | | | |
| E-4: Ethylene-propylene copolymer (ethylene copolymerization ratio = 96%, density = 0.90g/cm³, MFR = 8.0g/10 minutes); | | | | | | | |
| E-5: Polypropylene (density = 0.90g/cm³, MFR = 2.4g/10 minutes); | | | | | | | |
| E-6: Polyethylene (density = 0.927g/cm³, MFR = 4.0g/10 minutes). | | | | | | | |

### Part 2 (Evaluation of packaging films)

The packaging films prepared in Part 1 were evaluated as follows regarding their transparency, antifog property, smoothness and antiblocking property. The results are summarized in Table 2.

**Table 2**

| | Transparency | | Antifog property | | Smoothness | | Antiblocking property | |
|---|---|---|---|---|---|---|---|---|
| | After 24 hours | After 4 weeks | After 24 hours | After 4 weeks | After 24 hours | After 4 weeks | After 24 hours | After 4 weeks |
| Test Examples (Invention) | | | | | | | | |
| 1 | A | A | A | A | A | A | A | A |
| 2 | A | A | A | A | A | A | A | A |
| 3 | A | A | A | A | A | A | A | A |
| 4 | A | A | A | A | A | A | A | A |
| 5 | A | A | A | A | A | A | A | A |
| 7 | A | A | A | A | A | A | A | A |
| 8 | A | A | A | A | A | A | A | A |
| 9 | A | A | A | A | A | A | A | A |

| Test Examples (Comparison) | | | | | | | | |
|---|---|---|---|---|---|---|---|---|
| 10 | A | B | A | A | A | A | A | A |
| 11 | A | A | A | A | A | A | A | B |
| 12 | A | B | A | A | A | A | A | A |
| 13 | A | B | A | A | A | A | A | A |
| 14 | B | B | A | A | A | A | A | A |
| 15 | A | A | A | A | B | B | A | A |
| 16 | A | A | A | A | B | B | A | A |
| 17 | A | A | A | A | B | B | A | A |
| 18 | A | A | A | A | B | B | A | A |
| 19 | A | A | A | A | A | A | B | B |
| 20 | A | A | A | A | A | A | B | B |
| 21 | A | A | A | A | B | B | B | B |
| 22 | B | B | B | B | A | A | A | A |
| 23 | A | A | A | A | B | B | B | B |
| 24 | A | A | A | A | B | B | B | B |
| 25 | A | A | A | A | B | B | B | B |
| 26 | A | A | A | A | B | B | B | B |
| 27 | B | B | B | B | A | A | A | A |

| Comparison Examples | | | | | | | | |
|---|---|---|---|---|---|---|---|---|
| 1 | A | A | D | D | C | C | B | B |
| 2 | A | A | C | C | B | B | C | C |
| 3 | A | A | B | B | D | D | P | D |
| 4 | A | A | D | D | D | D | D | D |
| 5 | D | D | B | B | D | D | D | D |
| 6 | C | C | C | D | C | C | C | C |

### Transparency

After the packaging films prepared in Part 1 were each adjusted under the condition of relative humidity 65% for 24 hours at 20°C, haze was measured and evaluated according to the following standards. Similar evaluations were also made on the films kept for 4 weeks under the condition of relative humidity 50% at 40°C.
A: Less than 5% (excellent transparency)
B: 5% or greater but less than 10% (good transparency)
C: 10% or greater but less than 15% (poor transparency)
D: 15% or greater (very poor transparency)

### Antifog property

After the packaging films prepared in Part 1 were each adjusted under the condition of relative humidity 65% for 24 hours at 20°C, a beaker containing water at 20°C was covered with each film such that the test surface will face inside and left for one hour in an environment of temperature at 5°C. Water drops which become attached to the test surface were observed and evaluated as follows. Similar evaluations were made on the films kept for 4 weeks at 40°C under the condition of relative humidity of 50%.
A: Transparent without water drops (excellent antifog property)
B: Transparent although with large water drops (good antifog property)
C: Somewhat non-transparent with water drops (poor antifog property)
D: Not transparent with small water drops (very poor antifog property)

### Smoothness

After the packaging films prepared in Part 1 were each adjusted under the condition of relative humidity 65% for 24 hours at 20°C, a friction tester (Type TR produced by Toyo Seiki Seisakusho, Ltd.) was used to measure the coefficient of kinetic friction according to ASTM-D-1894 and the measured values were evaluated as follows.
A: 0.05 or greater and less than 0.25 (excellent smoothness)
B: 0.25 or greater and less than 0.35 (good smoothness)
C: 0.35 or greater and less than 0.45 (poor smoothness)
D: 0.45 or greater (very poor smoothness and not practical)

### Antiblocking property

Two pieces of length 80mm and width 50mm were cut out from each of the packaging films immediately after they were prepared in Part 1 and they were placed one above the other such that portions of test surfaces with length 50mm and width 50mm would overlap and contact each other. After a load of 10kg/cm² was applied for 48 hours at 40°C on the mutually contacting test surfaces, the load was removed and a tensile tester (tradename of Autograph AG-G produced by Shimadzu Corporation) was used to measure the force necessary to separate the two sheets by pulling their edges in mutually opposites shearing directions of the sheets. The measured values were evaluated as follows. Similar evaluations were made also on sheets from films kept for 4 weeks under the condition of relative humidity of 50% at 40°C.
A: Less 0.2N/cm² (excellent antiblocking property)
B: 0.2N/cm² or greater and less than 0.4N/cm² (good antiblocking property)
C: 0.4N/cm² or greater and less than 0.6N/cm² (poor antiblocking property)
D: 0.6N/cm² or greater (very poor antiblocking property)

### Part 3 Production of packaging films)

### Test Example 28 (Invention)

After ethylene-(1-butene) copolymer (ethylene copolymerization ratio= 95%, density = 0.920g/cm³, MFR = 2.1g/10 minute) (88 parts), diglycerol monolsurate (3.9 parts), sodium dodecylsulfonate (2.4 parts) and silica (with average particle diameter 4.0µm) (5.7 parts) were placed inside a tumbler blender and mixed, they were further melted and kneaded by means of a two-spindle extruder to obtain master pellets of polyolefin resin composition. These master pellets (10 parts) and aforementioned ethylene-(1-butene) copolymer (ethylene copolymerization ratio = 95%; density= 0.920g/cm³, MFR = 2.1g/10 minutes) (90 parts) were mixed inside the tumbler blender to obtain the polyolefin resin composition for forming the layer that comes to contact the objects to be packages. A coextruded three-layer film with thickness 60µm was obtained by molding this polyolefin resin composition to form the inner layer for contacting the object to be packaged and the aforementioned athylene-(1-butene) copolymer (ethylene copolymerization ratio = 95% density = 0.920g/cm³, MFR = 2.1g/10 minutes) to form the middle layer and the outer layer while cooling to 30°C. The ratio of thickness for the inner, middle and outer layers was 1/4/1.

### Test Examples 29-32 and 34-36 (Invention), Test Examples 37-54 (Comparative), and Comparison Examples 7-12

Packaging films of Test Examples 29-32 and 34-36 (Invention), Test Examples 37-54 (Comparative), and Comparison Examples 7-12 were similarly produced. Their details are shown in Table 3 wherein symbols defined in connection with Table 1 are used.

### Part 4 (Evaluation of packaging films)

The packaging films prepared in Part 3 were evaluated as done in Part 2 for the packaging films prepared in Part 1 regarding their transparency, antifog property, smoothness and anublocking property. The results are summarised in Table 4.

**Table 3**

| | Components contained by polyolefin resin | | | | | | Kind of polyolefin resin |
|---|---|---|---|---|---|---|---|
| | Comp A | Comp B | Comp C | *4 | *5 | *6 | |
| | *1 | *2 | *3 | | | | |
| Test Examples (Invention) | | | | | | | |
| 28 | A-1/0.39 | B-1/0.24 | C-1/0.57 | 1.20 | 62/38 | 90 | E-1 |
| 29 | A-2/3.50 | B-2/1.20 | C-2/0.70. | 5.40 | 74/26 | 15 | E-2 |
| 30 | A-3/1.40 | B-3/0.60 | C-3/0.80 | 2.80 | 70/30 | 40 | E-3 |
| 31 | A-4/3.80 | B-4/2.10 | C-4/0.90 | 6.80 | 64/36 | 15 | E-4 |
| 32 | A-5/0.78 | B-5/0.32 | C-5/0.20 | 1.30 | 71/29 | 18 | E-5 |
| 34 | A-7/0.78 | B-7/0.22 | C-7/0.95 | 1.95 | 78/22 | 95 | E-1 |
| 35 | A-8/0.30 | B-8/0.20 | C-8/0.30 | 0.80 | 60/40 | 60 | E-2 |
| 36 | A-9/2.80 | B-9/1.20 | C-9/0.60 | 4.60 | 70/30 | 15 | E-3 |

| Test Examples (Comparative) | | | | | | | |
|---|---|---|---|---|---|---|---|
| 37 | A.10/1.02 | B-10/0.48 | C-6/0.45 | 1.95 | 68/32 | 30 | E-4 |
| 38 | A-11/1.48 | B-11/0.52 | C-7/0.98 | 298 | 7426 | 49 | E-5 |
| 39 | A-12/0.96 | B-12/0.24 | C-8/0.84 | 2.04 | 80/20 | 70 | E-1 |
| 40 | A-13/0.63 | B-13/0.32 | C-9/0.76 | 1.71 | 66/34 | 80 | E-2 |
| 41 | A-14/0.10 | B-14/0.12 | C-10/0.31 | 0.53 | 45/55 | 141 | E-6 |
| 42 | A-15/4.5 | B-15/0.50 | C-10/0-3 | 530 | 90/10 | 6 | E-1 |
| 43 | A-16/0.06 | B-16/0.06 | C-11/0.06 | 0.18 | 50/50 | 50 | E-2 |
| 44 | A-17/4.8 | B-17/3.5 | C-11/15 | 9.80 | 58/42 | 18 | E-4 |
| 45 | A-18/3.3 | B.18/5.0 | C-12/19 | 10.2 | 40/60 | 23 | E-3 |
| 46 | A-19/1.7 | B-19/0.30 | C.13/1.2 | 32 | 85/15 | 60 | E-4 |
| 47 | A-20/3.44 | B-20/2.81 | C-14/0.50 | 6.75 | 55/45 | 8 | E-5 |
| 48 | A-21/2.4 | B-21/5.6 | G15/0.24 | 8.24 | 30/70 | 3 | E-1 |
| 49 | A-22/0.98 | B-22/0.02 | C-16/1.75 | 2.75 | 98/2 | 175 | E-2 |
| 50 | A-23/2.8 | B-23/52 | C-17/0.32 | 8.32 | 35/65 | 4 | B-5 |
| 51 | A-24/4.8 | B-24/0.20 | C-18/1.80 | 6.80 | 96/4 | 36 | E-6 |
| 52 | A-25/1.50 | B-25/0.04 | C-19/0.30 | 1.84 | 97/3 | 19 | E-2 |
| 53 | A-26/6.0 | B-26/3.00 | C-20/0.70 | 9.70 | 67/33 | 78 | E-3 |
| 54 | A-27/2.00 | B-27/2.00 | C-21/2.20 | 6.20 | 50/50 | 55 | E-4 |

| Comparison Examples | | | | | | | |
|---|---|---|---|---|---|---|---|
| 7 | --/-- | B-1/0.24 | C-1/0.57 | -- | -- | -- | E-1 |
| 8 | A-1/0.39 | --/-- | C-1/0.57 | -- | -- | -- | E-1 |
| 9 | A-1/0.39 | B-1/0.24 | --/-- | -- | -- | -- | E-1 |
| 10 | A-1/0.04 | B-1/0.02 | C-1/0.06 | 0.12 | 67/33 | 100 | E-1 |
| 11 | A-1/4.29 | B-1/2.64 | C-1/6.27 | 13.2 | 62/38 | 90 | E-1 |
| 12 | a-1/0.39 | B-1/0.24 | C-1/0.57 | 1.20 | 62/38 | 90 | E-1 |

**Table 4**

| | Transparency | | Antifog property | | Smoothness | | Antiblocking property | |
|---|---|---|---|---|---|---|---|---|
| | After 24 hours | After 4 weeks | After 24 hours | After 4 weeks | After 24 hours | After 4 weeks | After 24 hours | After 4 weeks |
| Test Examples (Invention) | | | | | | | | |
| 28 | A | A | A | A | A | A | A | A |
| 29 | A | A | A | A | A | A | A | A |
| 30 | A | A | A | A | A | A | A | A |
| 31 | A | A | A | A | A | A | A | A |
| 32 | A | A | A | A | A | A | A | A |
| 34 | A | A | A | A | A | A | A | A |
| 35 | A | A | A | A | A | A | A | A |
| 36 | A | A | A | A | A | A | A | A |

| Test Examples (Comparative) | | | | | | | | |
|---|---|---|---|---|---|---|---|---|
| 37 | A | B | A | A | A | A | A | A |
| 38 | A | A | A | A | A | A | A | B |
| 39 | A | B | A | A | A | A | A | A |
| 40 | A | B | A | A | A | A | A | A |
| 41 | B | B | A | A | A | A | A | A |
| 42 | A | A | A | A | B | B | A | A |
| 43 | A | A | A | A | B | B | A | A |
| 44 | A | A | A | A | B | B | A | A |
| 45 | A | A | A | A | B | B | A | A |
| 46 | A | A | A | A | A | A | B | B |
| 47 | A | A | A | A | A | A | B | B |
| 48 | A | A | A | A | B | B | B | B |
| 49 | B | B | B | B | A | A | A | A |
| 50 | A | A | A | A | B | B | B | B |
| 51 | A | A | A | A | B | B | B | B |
| 52 | A | A, | A | A | B | B | B | B |
| 53 | A | A | A | A | B | B | B | B |
| 54 | B | B | B | B | A | A | A | A |

| Comparison 1 Examples | | | | | | | | |
|---|---|---|---|---|---|---|---|---|
| 7 | A | A | D | D | C | C | B | B |
| 8 | A | A | C | C | B | B | C | C |
| 9 | A | A | B | B | D | D | D | D |
| 10 | A | A | D | D | D | D | D | D |
| 11 | D | D | B | B | D | D | D | D |
| 12 | C | C | C | D | C | C | C | C |

## Claims

1. A packaging film which is single-layered or multi-layered, comprising an inner layer that comes into contact with objects to be packaged, said inner layer comprising a polyolefin resin composition with polyolefin resin containing Component A, Component B and Component C in a total amount of from 0.15 to 12 weight %, Wherein Component A is one or more selected from the group consisting of a partial ester of an aliphatic trihydric-hexahydric alcohol and an aliphatic monocarboxylic acid having from 8 to 22 carbon atoms, an alkylene oxide adduct of an aliphatic monohydric alcohol having from 8 to 22 carbon atoms, an alkylene oxide adduct of an aliphatic monocarboxylic acid having from 8 to 22 carbon atoms and an alkylene oxide adduct of a partial ester of an aliphatic trihydric-hexahydric alcohol and an aliphatic monocarboxylic acid having from 8 to 22 carbon atoms; Component B is one or more selected from the group consisting of an alkali salt of an alkyl sulfonic acid having an alkyl group having from: 12 to 18 carbon atoms; and Component C is one or more selected from the group consisting of oxidic inorganic particles, silicate inorganic particles and organic cross-linked particles;
wherein the polyolefin resin of said inner layer contains said Component A in an amount of from 0.3 to 4 weight %, said Component B in an amount of from 0.2 to 2.6 weight % and said Component C in an amount of from 0.1 to 1 weight %, and wherein said Component A and said Component B are contained in a weight ratio of from 60/40 to 80/20, and said Component C is contained in a weight ratio of from 10/100 to 100/100 with respect to the sum of said Component A and said Component B.

2. A packaging film according to claim 1, wherein said Component A is a partial ester of an aliphatic trihydric or tetrahydric alcohol and an aliphatic monocarboxylic acid having from 12 to 18 carbon atoms.

3. A packaging film according to claim 1, wherein said Component A is a partial ester of an aliphatic trihydric-hexahydric alcohol and an aliphatic monocarboxylic acid having from 8 to 22 carbon atoms, said partial ester having a melting point of 40°C or below.

4. A packaging film according to any preceding claim, wherein said Component C is at least one selected from the group consisting of oxidic inorganic particles and silicate inorganic particles.

5. A packaging film according to any preceding claim, wherein said Component C is one or more selected from the group consisting of silica, zeolite and talc.

## Patentansprüche

1. Verpackungsfolie, die ein- oder mehrschichtig ist, umfassend eine Innenschicht, die mit zu verpackenden Gegenständen in Kontakt kommt, wobei die Innenschicht eine Polyolefinharz-Zusammensetzung umfasst, mit Polyolefinharz enthaltend Komponente A, Komponente B und Komponente C in einer Gesamtmenge von 0,15 bis 12 Gew.-%, worin Komponente A eines oder mehr, ausgewählt aus der Gruppe, bestehend aus einem Teilester von einem drei- bis sechswertigen aliphatischen Alkohol und einer aliphatischen Monocarbonsäure mit von 8 bis 22 Kohlenstoffatomen, einem Alkylenoxid-Addukt von einem einwertigen aliphatischen Alkohol mit von 8 bis 22 Kohlenstoffstatomen, einem Alkylenoxid-Addukt von einer aliphatischen Monocarbonsäure mit von 8 bis 22 Kohlenstoffatomen und einem Alkylenoxid-Addukt von einem Teilester von einem dreibis sechswertigen aliphatischen Alkohol und einer aliphatischen Monocarbonsäure mit von 8 bis 22 Kohlenstoffatomen, darstellt; Komponente B eines oder mehr, ausgewählt aus der Gruppe, bestehend aus einem Alkalisalz von einer Alkylsulfonsäure mit einer Alkylgruppe mit von 12 bis 18 Kohlenstoffatomen, darstellt; und Komponente C eines oder mehr, ausgewählt aus der Gruppe, bestehend aus anorganischen oxidischen Partikeln, anorganischen Silikatpartikeln und organischen vemetzten Partikeln, darstellt;
worin das Polyolefinharz der Innenschicht die Komponente A in einer Menge von 0,3 bis 4 Gew.-%, die Komponente B in einer Menge von 0,2 bis 2,6 Gew.-% und die Komponente C in einer Menge von 0,1 bis 1 Gew.-% enthält, und worin die Komponente A und die Komponente B in einem Gewichtsverhältnis von 60/40 bis 80/20 enthalten sind und die Komponente C in einem Gewichtsverhältnis von 10/100 bis 100/100 in Bezug auf die Summe der Komponente A und der Komponente B enthalten ist.

2. Verpackungsfolie nach Anspruch 1, worin die Komponente A einen Teilester von einem drei- oder vierwertigen aliphatischen Alkohol und einer aliphatischen Monocarbonsäure mit von 12 bis 18 Kohlenstoffatomen darstellt.

3. Verpackungsfolie nach Anspruch 1, worin die Komponente A einen Teilester von einem drei- bis sechswertigen aliphatischen Alkohol und einer aliphatischen Monocarbonsäure mit von 8 bis 22 Kohlenstoffatomen darstellt, wobei der Teilester einen Schmelzpunkt von 40 °C oder darunter aufweist.

4. Verpackungsfolie nach einem der vorangehenden Ansprüche, worin die Komponente C mindestens eines, ausgewählt aus der Gruppe, bestehend aus anorganischen oxidischen Partikeln und anorganischen Silikatpartikeln, darstellt.

5. Verpackungsfolie nach einem der vorangehenden Ansprüche, worin die Komponente C eines oder mehr, ausgewählt aus der Gruppe, bestehend aus Siliziumdioxid, Zeolith und Talkum, darstellt.

## Revendications

1. Film d'emballage qui est monocouche ou multicouche, comprenant une couche interne qui vient en contact avec les objets à emballer, ladite couche interne comprenant une composition de résine de polyoléfine présentant une résine de polyoléfine contenant un Composant A, un Composant B et un Composant C en quantité totale de 0,15 à 12 % en poids, dans lequel le Composant A est un composé ou plusieurs choisis dans le groupe comprenant un ester partiel d'un alcool aliphatique trihydrique à hexahydrique et d'un acide aliphatique monocarboxylique présentant de 8 à 22 atomes de carbone, un produit d'addition d'oxyde d'alkylène d'un alcool aliphatique monohydrique présentant de 8 à 22 atomes de carbone, un produit d'addition d'oxyde d'alkylène d'un acide aliphatique monocarboxylique présentant de 8 à 22 atomes de carbone et un produit d'addition d'oxyde d'alkylène d'un ester partiel d'un alcool aliphatique trihydrique à hexahydrique et d'un acide aliphatique monocarboxylique présentant de 8 à 22 atomes de carbone ; le Composant B est un composé ou plusieurs choisis dans le groupe comprenant un sel alcalin d'un acide alkylsulfonique présentant un groupe d'alkyle portant de 12 à 18 atomes de carbone ; et le Composant C est un composé ou plusieurs choisis dans le groupe comprenant des particules inorganiques oxydiques, des particules inorganiques de silicate et des particules organiques réticulées ;
dans lequel la résine de polyoléfine de ladite couche interne contient ledit Composant A en quantité variant de 0,3 à 4 % en poids, ledit Composant B en quantité variant de 0,2 à 2,6 % en poids et ledit Composant C en quantité variant de 0,1 à 1 % de poids, et dans laquelle ledit Composant A et ledit Composant B sont présents dans un rapport pondéral variant de 60/40 à 80/20, et ledit Composant C est présent dans un rapport pondéral variant de 10/100 à 100/100 par rapport à la somme dudit Composant A et dudit Composant B.

2. Film d'emballage conforme à la revendication 1, dans lequel ledit Composant A est un ester partiel d'un alcool aliphatique trihydrique ou tétrahydrique et d'un acide aliphatique monocarboxylique présentant de 12 à 18 atomes de carbone.

3. Film d'emballage conforme à la revendication 1, dans lequel ledit Composant A est un ester partiel d'un alcool aliphatique trihydrique à hexahydrique et d'un acide aliphatique monocarboxylique présentant de 8 à 22 atomes de carbone, ledit ester partiel présentant un point du fusion de 40°C ou inférieur.

4. Film d'emballage conforme à l'une quelconque des revendications précédentes, dans lequel ledit Composant C est au moins un composé choisi dans le groupe comprenant des particules inorganiques oxydiques et des particules inorganiques de silicate.

5. Film d'emballage conforme à l'une quelconque des revendications précédentes, dans lequel ledit Composant C est un composé ou plusieurs choisis dans le groupe comprenant de la silice, de la zéolithe et du talc.
